# EUROPÄISCHE PATENTSCHRIFT

(11) **EP 3 166 532 B1**
(45) Veröffentlichungstag und Bekanntmachung des Hinweises auf die Patenterteilung: **01.05.2019**
(21) Anmeldenummer: 15734657.8
(22) Anmeldetag: 03.07.2015
(51) Int. Cl.: A61C 13/01, A61C 13/10, A61C 13/00

(54) **VERFAHREN ZUR HERSTELLUNG EINER DENTALPROTHESE**
METHOD FOR MANUFACTURING A DENTAL PROSTHESIS
PROCÉDÉ DE FABRICATION D'UNE PROTHÈSE DENTAIRE

(30) Priorität: 09.07.2014 DE 102014109563
(43) Veröffentlichungstag der Anmeldung: 17.05.2017
(73) Patentinhaber: Kulzer GmbH, 63450 Hanau (DE)
(72) Erfinder: BÖHM, Uwe, 61350 Bad Homburg (DE); RUPPERT, Klaus, 63477 Maintal (DE); DEKERT, Stephan, 61273 Wehrheim/Obernhain (DE)
(74) Vertreter: Schultheiss & Sterzel Patentanwälte PartG mbB
(86) Internationale Anmeldenummer: PCT/EP2015/065232
(87) Internationale Veröffentlichungsnummer: WO 2016/005287

(56) Entgegenhaltungen:
- EP-A1- 2 742 906
- WO-A2-2012/021816
- US-A- 2 641 802
- US-A1- 2011 236 856
- US-A1- 2013 108 988
- J.R. Strub, J.C. Türp, S. Witkowski, M. B. Hürzeler, M. Kern: "Curriculum Prothetik", 2005, Quintessenz Verlags-GmbH, Berlin, XP002743543, ISBN: 3-87652-499-7 Seite 550 Seite 1086 - Seite 1088

## Beschreibung

Die Erfindung betrifft ein Verfahren zur Herstellung einer Dentalprothese aus einer Prothesenbasis und mehreren Prothesenzähnen. Die Erfindung betrifft auch eine Dentalprothese hergestellt mit einem solchen Verfahren.

Der gängige Weg ist die analoge Erstellung von Dentalprothesen. Zur Herstellung der Prothesenbasis wird dazu derzeit also meist ein analoges Verfahren verwendet, bei dem zunächst ein Abdruck des zahnlosen Kiefers des Patienten genommen wird. Aus diesem Abdruck wird eine Form gefertigt, die mit einem zahnfleischfarbenen Kunststoff ausgegossen wird. Nach Aushärtung des Kunststoffs wird dieser nachbearbeitet, um die gewünschte Form zu erhalten. Anschließend werden die Prothesenzähne in die Hohlform eingesetzt und während des Gießprozesses mit der Prothesenbasis verbunden.

Zur Herstellung der Dentalprothese werden Prothesenzähne manuell und einzeln auf einer Wachsbasis auf einem Gipsmodell des unbezahnten Kiefers aufgestellt. Diese Wachsprothese wird im nächsten Schritt in einer Küvette mit Gips, Silikon oder Gel (je nach späterer Verarbeitungstechnik) eingebettet, um dann nach Aushärten des Einbettmaterials die Wachsbasis mit heißem Wasser herauszuwaschen und einen Hohlraum für den Prothesenkunststoff zu schaffen. Die Prothesenzähne verbleiben dabei im Einbettmaterial. Ein entsprechender Kunststoff wird in den Hohlraum injiziert oder gegossen, dadurch erhält man nach Aushärtung des Kunststoffs die Dentalprothese. Bei der Aufstellung der konfektionierten Zähne werden diese der jeweiligen Mundsituation des Patienten vom Zahntechniker und gegebenenfalls auch vom Zahnarzt angepasst und beschliffen.

Ein Verfahren zur Herstellung einer Dentalprothese ist aus der WO 91/07141 A1 bekannt, wobei bei diesem Verfahren eine Prothesenbasis auf der Basis eines Abdrucks aus einem Kunststoffblock gefräst wird.

Neben handwerklichen Techniken gewinnen digitale Fertigungsmethoden im Dentalbereich immer mehr an Bedeutung. Zahnersatz wie z.B. Kronen und Brücken wird seit einigen Jahren mittels CAD-CAM-Technologien subtraktiv in Fräsverfahren hergestellt (CAM - Computer-Aided Manufacturing, Deutsch: rechner-unterstützte Fertigung, CAD - Computer-Aided Design, Deutsch: rechnerunterstützte Konstruktion).

Ferner gewinnen generative Methoden wie SLM (Selektive Laser Melting) zur Herstellung von Kronen, Brücken und Modellen sowie Stereolithographie und DLP (Digital light processing) für Dentalprodukte auf Polymerbasis wie zum Beispiel Provisorien, Prothesen, KFO-Apparaturen (Kiefer-Orthopädie-Apparaturen), Aufbißschienen, Bohrschablonen oder Dentalmodellen immer mehr an Bedeutung. Dabei ist die Herstellung von Zahnersatz auf Acrylatbasis mittels RP-Verfahren bisher immer noch starken Einschränkungen unterworfen. Mehrfarbiger Zahnersatz oder Zahnersatz aus verschiedenen Polymer-Materialien (zum Beispiel für Schmelz- und Dentinmassen) zur Herstellung von hochwertigem und ästhetischem Zahnersatz ist bisher nur mittels aufwendiger RP-Maschinen mit mehreren Materialkammern oder mittels aufwendiger Klebe- und Fügetechniken herstellbar.

Ebenso ist die Herstellung von Materialkombinationen (zum Beispiel CoCr und Polymer) mittels RP-Verfahren bisher sehr aufwendig und nicht in Serienreife umgesetzt.

Es gibt bereits erste Verfahren, wie beispielsweise die aus der DE 10 2009 056 752 A1, der WO 2012/021816 A1 oder der WO 2013 124 452 A1 bekannten Verfahren, bei denen eine dentale Teil- beziehungsweise Totalprothese digital aufgestellt und über CAD-CAM-Verfahren produziert wird. Aus der DE 103 04 757 B4 ist ein Verfahren zur Herstellung von Zahnersatz bekannt, bei dem eine virtuelle Aufstellung der Zähne in ein virtuelles Modell erfolgt und die Herstellung einer Prothesenbasis auf der Basis des virtuellen Modells erfolgt.

Solche Verfahren haben den Nachteil, dass geringe Korrekturen der Lage und Orientierung der Prothesenzähne in der Prothesenbasis durch den anwendenden Zahnarzt oder Zahntechniker nur mit größerem Aufwand durchgeführt werden können. Die Prothesenzähne müssen okklusal bearbeitet oder entnommen werden, wobei anschließend die Prothesenbasis beschliffen wird, oder die Prothesenzähne basal beschliffen werden, um deren Position und Lage anzupassen.

Die Aufgabe der Erfindung besteht also darin, die Nachteile des Stands der Technik zu überwinden. Insbesondere sollen ein Verfahren bereitgestellt werden, mit dem eine einfache Korrektur der Lage und Orientierung der Prothesenzähne in der Prothesenbasis durch den Zahnarzt beziehungsweise den Anwender möglich ist, um die Dentalprothese auf einfache Weise an die Bedürfnisse des Patienten anpassen zu können. Zudem soll eine möglichst einfache, vollständige und kostengünstige Herstellung der Prothesenbasis und damit der Dentalprothese möglich sein.

Die Aufgaben der Erfindung werden gelöst durch ein extraorales Verfahren zur Herstellung einer Dentalprothese aus einer Prothesenbasis und mehreren Prothesenzähnen, wobei jeder Prothesenzahn eine koronale Oberfläche und eine basale Oberfläche aufweist, mit den folgenden chronologischen Schritten:
A1) an für die Fixierung der Prothesenzähne vorgesehenen Flächen der Prothesenbasis und/oder basal an den Prothesenzähnen wird eine fluide zähe Masse aufgebracht;
A) die basalen Oberflächen der Prothesenzähne werden in die für die Fixierung der Prothesenzähne vorgesehene Flächen der Prothesenbasis eingesetzt und dort mit der Prothesenbasis derart verbunden, dass die Prothesenzähne nach dem Einsetzen in die Prothesenbasis in der Prothesenbasis beschränkt beweglich sind, wobei die fluide zähe Masse nach dem Einsetzen der Prothesenzähne zwischen den Prothesenzähnen und den für die Fixierung der Prothesenzähne vorgesehenen Flächen der Prothesenbasis angeordnet ist, so dass die Position und/oder die Ausrichtung der Prothesenzähne in der Prothesenbasis durch eine Verformung der fluiden zähen Masse verändert werden kann, wobei die für die Fixierung der Prothesenzähne vorgesehenen Flächen der Prothesenbasis größer sind als die korrespondierenden basalen Oberflächen der Prothesenzähne, so dass die Prothesenzähne in der Prothesenbasis um bis zu 5° gekippt, gedreht und/oder um bis zu 1 mm in der Position verschoben werden können, und wobei die Flächen eine Indexierung aufweisen, so dass die Prothesenzähne nur in einer bestimmten Orientierung in der Prothesenbasis einzusetzen sind und jeder Prothesenzahn nur zu einer Fläche passt;
B) die Position und/oder die Ausrichtung wenigstens eines Prothesenzahns in der Prothesenbasis wird verändert;
C) die Prothesenzähne werden auf der koronalen Seite in einem Schlüssel fixiert und dabei die Lage und die Position der Prothesenzähne zueinander in der veränderten Position und/oder Ausrichtung gesichert;
D) die Prothesenzähne werden von der Prothesenbasis getrennt;
F) die Prothesenzähne werden mit einem Zement oder einem Klebstoff in der Prothesenbasis befestigt, wobei die Zwischenräume zwischen den für die Fixierung der Prothesenzähne vorgesehenen Flächen der Prothesenbasis und den Prothesenzähnen mit dem Zement oder dem Klebstoff gefüllt werden; und
G) der Zement oder der Klebstoff härtet aus oder wird ausgehärtet, wobei die Prothesenzähne fest mit der Prothesenbasis verbunden werden, so dass die Lage und die Position der Prothesenzähne zueinander und zur Prothesenbasis festgelegt ist, und der Schlüssel wird von den Prothesenzähnen getrennt.

Als Schlüssel wird in der vorliegenden Erfindung ein Material oder eine Vorrichtung verstanden, mit dem die Prothesenzähne ortsfest und orientierungsfest relativ zueinander befestigt werden, ohne dass sich deren Position oder Lage zueinander nach der Veränderung von deren Position und/oder Lage in der Prothesenbasis noch ändert. Bevorzugt kann hierzu eine Silikonmasse als Schlüssel verwendet werden.

Die Bezeichnung "koronal" (lat. corona 'Krone') bedeutet an der Zahnkrone und zur Zahnkrone hin als Lage- und Richtungsbezeichnung an den Zähnen, umfassend die okklusale Oberfläche und die die okklusale Oberfläche umgebenden Umfangsbereiche der Zahnprothese. Beschränkt beweglich bedeutet in diesem Zusammenhang, dass die Prothesenzähne in der Prothesenbasis beweglich aber nicht völlig frei beweglich sind. Die eingesetzten Prothesenzähne können dann in den für die Fixierung der Prothesenzähne vorgesehenen Flächen der Prothesenbasis gegen die Prothesenbasis um einige Grad gedreht oder gekippt beziehungsweise um einige zehntel Millimeter verschoben werden.

Das Aushärten des Zements oder Klebstoffs kann durch das Verstreichen lassen einer ausreichend langen Zeitspanne erfolgen. Während des Aushärtens finden dabei chemische Reaktionen statt, die zum Aushärten des Zements oder des Klebers führen. Das Aushärten kann durch eine Trocknung oder beispielsweise durch erhöhte Temperatur aktiv unterstützt werden.

Die Prothesenzähne und/oder die Prothesenbasis bestehen bevorzugt aus einem Kunststoff, besonders bevorzugt aus Polymethylmethacrylat (PMMA).

Die Prothesenzähne können einzeln und/oder in mehreren Gruppen zusammenhängend oder als komplette Zahnreihen zusammenhängend vorliegen. Zusammenhängende Prothesenzähne sind fest miteinander verbunden.

Bei erfindungsgemäßen Verfahren ist vorgesehen, dass vor Schritt A) an den für die Fixierung der Prothesenzähne vorgesehenen Flächen der Prothesenbasis und/oder basal an den Prothesenzähnen eine fluide zähe Masse, bevorzugt ein Wachs oder eine Knete, aufgebracht wird, die nach dem Einsetzen der Prothesenzähne in Schritt A) zwischen den Prothesenzähnen und den für die Fixierung der Prothesenzähne vorgesehenen Flächen der Prothesenbasis angeordnet ist, so dass die Position und/oder die Ausrichtung der Prothesenzähne in der Prothesenbasis durch eine Verformung der fluiden zähen Masse, insbesondere des Wachses oder der Knete, verändert werden kann.

Die fluide zähe Masse, beziehungsweise solche Wachse, bevorzugt Klebewachse, oder Kneten, müssen bei Raumtemperatur (oder leicht darüber) derart weich sein, dass einerseits die Lage und Orientierung der Prothesenzähne veränderbar ist, andererseits sich die Lage und Orientierung der Prothesenzähne in der Prothesenbasis nicht aufgrund des eigenen Gewichts verändert. Zudem sollte die fluide zähe Masse bevorzugt eine gewisse Klebkraft aufweisen. Die Klebkraft oder Adhäsion ausreichen muss, um die Zahnprothesen zu halten, ohne dass sich die Zahnprothesen aus der fluiden zähen Masse lösen können.

Die fluide zähe Masse weist dazu bevorzugt eine Viskosität zwischen 10² Pa·s und 10⁶ Pa·s auf. Die fluide zähe Masse, insbesondere das Wachs oder die Knete, ist zwischen den Prothesenzähnen und der Prothesenbasis angeordnet und lässt sich manuell verformen. Dadurch sind die Prothesenzähne in der Prothesenbasis beweglich, halten aber ohne weitere Krafteinwirkung ihre Position. Dadurch kann die Position und die Ausrichtung der Prothesenzähne in der Prothesenbasis bequem manuell durch den Zahnarzt oder den Anwender verändert werden.

Durch diese Maßnahme ist eine besonders einfache Positionierung und Orientierung der Prothesenzähne in der Prothesenbasis möglich.

Die fluide zähe Masse, insbesondere das Wachs oder die Knete, soll nach der Anwendung, das heißt nach der Korrektur der Lage und/oder Ausrichtung der Prothesenzähne in der Prothesenbasis und dem Entfernen der Prothesenzähne aus der Prothesenbasis möglichst leicht und rückstandsfrei von den Prothesenzähnen und der Prothesenbasis entfernbar sein.

Bei solchen Verfahren kann vorgesehen sein, dass die fluide zähe Masse, insbesondere das Wachs oder die Knete, nach Schritt D) und vor Schritt F) von den Prothesenzähnen und/oder den für die Fixierung der Prothesenzähne vorgesehenen Flächen der Prothesenbasis entfernt wird, bevorzugt mit heißem Wasser abgespült oder mit Wasserdampf entfernt wird.

Bevorzugt wird die gesamte Prothesenbasis und/oder werden die gesamten Prothesenzähne von der fluiden zähen Masse, insbesondere dem Wachs oder der Knete gesäubert.

Die Säuberung der Oberflächen der Prothesenzähne und/oder der Prothesenbasis von der fluiden zähen Masse, insbesondere von dem Wachs oder der Knete, dient dazu, dass bei der nachfolgenden endgültigen Befestigung der Prothesenzähne in der Prothesenbasis eine stabile Verbindung erreichbar ist. Hierdurch wird eine auch über lange Zeit stabile Dentalprothese ermöglicht.

Mit einer Weiterbildung des erfindungsgemäßen Verfahrens wird vorgeschlagen, dass die Prothesenbasis und/oder die Prothesenzähne mit einem CAM-Verfahren oder einem Rapid-Prototyping-Verfahren hergestellt und/oder bearbeitet wird oder werden. Vorliegend wird im Rahmen der Erfindung der allgemein bekannte Begriff Rapid-Prototyping-Verfahren für ein Herstellungsverfahren verwendet, bei dem die Prothesenbasis und/oder die Prothesenzähne mit einem für Rapid-Prototyping üblichen Herstellungsverfahren hergestellt wird. Da es sich bei der Prothesenbasis und/oder der Prothesenzähne nicht um einen Prototypen sondern um ein halbfertiges Bauteil handelt, könnte anstatt des Begriffs "Rapid-Prototyping-Verfahren" auch die in solchen Zusammenhängen gelegentlich gebrauchten Begriffe "Rapid Manufacturing", "generatives Fertigungsverfahren", "Rapid-Product-Development", "Advanced Digital Manufacturing" oder "E-Manufacturing" verwendet werden. Die Prothesenbasis wird bevorzugt aus einem rosa-farbenen oder pinken Kunststoff gefertigt und die Prothesenzähne aus einem zahnfarbenen Kunststoff.

Die Kombination des Herstellungsverfahrens mit einem CAM- oder RP-Verfahren zur Herstellung oder Bearbeitung der Prothesenbasis und/oder der Prothesenzähne hat den Vorteil, dass die für die Beweglichkeit der Prothesenzähne in der Prothesenbasis in Schritt B) notwendigen Spielräume zwischen der Fläche zur Fixierung der Prothesenzähne mit der Prothesenbasis und der basalen Auflageflächen der Prothesenzähne gleich rechnerisch im Rahmen eines CAD-Verfahrens berücksichtigt werden kann und beim Herstellen über das CAM-Verfahren oder RP-Verfahren dann automatisch berücksichtigt wird.

Eine nicht erfindungsgemäße Alternative ist, dass in Schritt B) die Veränderung der Position und/oder der Ausrichtung wenigstens eines Prothesenzahns in der Prothesenbasis direkt durch Anpassung am Patienten erfolgt.

Hierdurch wird klargestellt, dass die Veränderung der Position und/oder der Ausrichtung beziehungsweise Orientierung der Prothesenzähne zur Anpassung an die anatomischen Gegebenheiten im Mundraum des Patienten erfolgen soll.

Mit einer Weiterbildung des erfindungsgemäßen Verfahrens kann vorgesehen sein, dass in einem Schritt E) zwischen den Schritten D) und F) die freiliegenden Oberflächen der Prothesenzähne zumindest bereichsweise mit einem Lösungsmittel angequollen werden und/oder die für die Fixierung der Prothesenzähne vorgesehenen Flächen der Prothesenbasis zumindest bereichsweise mit einem Lösungsmittel angequollen werden.

Hierdurch wird eine besonders stabile Verbindung der Prothesenzähne mit der Prothesenbasis erreicht. Durch das Anquellen werden die Oberflächen flüssig beziehungsweise fluid, so dass bei einem anschließenden Klebevorgang diese Bereiche neu ausgehärtet werden und so eine stabilere Verbindung über eine größere Dicke des Prothesenmaterials erzeugt wird.

Mit einer besonders bevorzugten Weiterentwicklung des Verfahrens kann ferner vorgesehen sein, dass in Schritt E) die freiliegenden Oberflächen der Prothesenzähne zumindest bereichsweise aufgeraut und mit einem Lösungsmittel angequollen werden und/oder die für die Fixierung der Prothesenzähne vorgesehenen Flächen der Prothesenbasis zumindest bereichsweise aufgeraut und mit einem Lösungsmittel angequollen werden.

Durch die zusätzliche Aufrauhung oder Anrauhung der Oberflächen kann das Lösungsmittel die Oberflächen schneller anlösen. Das Aufrauen oder Anrauhen der Oberfläche kann durch das Lösungsmittel geschehen. Zudem wird die effektive Oberfläche zum Verbinden über den Zement oder den Kleber vergrößert und damit der Halt der Prothesenzähne in der Prothesenbasis verbessert und dadurch die Haltbarkeit der Dentalprothese verbessert. Ferner kann erfindungsgemäß Prothesenzähne und die Prothesenbasis mit heißem Wasser oder Wasserdampf gereinigt werden.

Besonders vorteilhaft lässt sich das erfindungsgemäße Verfahren anwenden, da vorgesehen ist, dass die für die Fixierung der Prothesenzähne vorgesehenen Flächen der Prothesenbasis größer sind als die korrespondierenden basalen Oberflächen der Prothesenzähne (beziehungsweise als die korrespondierenden basalen Oberflächen der Prothesenzähne, die zur Auflage auf den Flächen der Prothesenbasis vorgesehen sind), so dass die Prothesenzähne in der Prothesenbasis beschränkt beweglich sind. Es ist vorgesehen, dass die Prothesenzähne in der Prothesenbasis um bis zu 5° gekippt, gedreht und/oder um bis zu 1 mm in der Position verschoben werden können. Drehung bezieht sich dabei auf die Längsachse der Prothesenzähne und Kippen um einen Winkel senkrecht dazu.

Hierdurch werden die notwendigen Zwischenräume zur Beweglichkeit der Prothesenzähne in der Prothesenbasis geschaffen, die erfindungsgemäß bevorzugt mit der fluiden zähen Masse, insbesondere dem Wachs oder der Knete, zur Stabilisierung der Position und der Lage der Prothesenzähne zumindest bereichsweise gefüllt werden.

Des Weiteren kann vorgesehen sein, dass in Schritt C) als Schlüssel ein Silikonschlüssel verwendet wird.

Silikonschlüssel, beispielsweise eine Silikonmasse, verfügen über geeignete mechanische Eigenschaften, um die Prothesenzähne in der gewünschten neuen Position zu halten.

Bevorzugt kann bei erfindungsgemäßen Verfahren vorgesehen sein, dass die überschüssigen Mengen Zement oder Klebstoff nach dem Aushärten entfernt werden.

Mit einer Weiterentwicklung wird auch vorgeschlagen, dass als Zement ein selbsthärtender Zementteig verwendet wird, bevorzugt ein Zementteig aus einem Pulver und einer Flüssigkeit verwendet wird, besonders bevorzugt ein Polymethylmethacrylat-Zementteig verwendet wird.

Hierdurch lässt sich eine besonders stabile und einfach herzustellende Verbindung zwischen den Prothesenzähnen und der Prothesenbasis herstellen. Besonders bevorzugt werden dabei Zemente, die eine kurze Anquellzeit und eine blasenfreie Aushärtung des Zements aufweisen. Die Aushärtung des Zements soll bevorzugt bei Raumtemperatur und ohne erhöhten Druck erfolgen. Dabei hat sich insbesondere der Zement Paladur® der Firma Heraeus Kulzer GmbH besonders bewährt.

Der Zement oder der Kleber zur endgültigen Fixierung der Prothesenzähne in der Prothesenbasis sollte nicht toxisch, Volumenfüllend, Farbstabil, Dauerhaft im Verbund, Hydrolyse-Beständig und Volumenstabil beim Aushärten sein, sowie eine passende Farbe haben, die über lange Zeit stabil ist. Hierfür kommen neben PMMA-Zementen wie Paladur® der Heraeus Kulzer GmbH auch Versyo® der Heraeus Kulzer GmbH, Signum composit Flow® der Heraeus Kulzer GmbH oder andere PMMA-basierte Zemente in Frage.

Als Kleber lässt sich beispielsweise ein Sekundenkleber verwenden oder ein Klebstoff der auch zum Füllen des Volumens der Zwischenräume zwischen der Prothesenbasis und den Prothesenzähnen geeignet ist.

Ferner kann erfindungsgemäß vorgesehen sein, dass vor Schritt A1) eine Teildentalprothese oder eine Totaldentalprothese digital mit einem CAD-Verfahren konstruiert wird und mittels File-Splitting in ein virtuelles Modell einer Prothesenbasis und ein virtuelles Modell der Prothesenzähne zerlegt wird, wobei die Prothesenbasis und/oder die Prothesenzähne auf Basis der virtuellen Modelle mittels eines CAM-Verfahrens hergestellt werden.

Hierdurch lässt sich eine Automatisierung des Verfahrens erreichen, die mit CAD-CAM-Verfahren umsetzbar ist.

Bevorzugt kann ferner vorgesehen sein, dass als Lösungsmittel eine Methylmethacrylat-haltige Flüssigkeit verwendet wird.

Alternativ kann als Lösungsmittel auch ein Keton, wie Aceton, oder ein Alkohol verwendet werden. Methylmethacrylat-haltige Flüssigkeiten sind jedoch bei Prothesenzähnen und Prothesenbasen aus PMMA wesentlich besser zum Anquellen des PMMA geeignet.

Diese Lösungsmittel sind zum Anquellen der besonders bevorzugt verwendeten Materialien zur Herstellung der Prothesenbasis und der Prothesenzähne besonders gut geeignet.

Die der Erfindung zugrundeliegenden Aufgaben werden auch gelöst durch eine Dentalprothese hergestellt mit einem solchen Verfahren.

Offenbart wird noch ein Set zum Durchführen eines solchen Verfahrens, umfassend einen Schlüssel zum Fixieren der in einer Prothesenbasis ausgerichteten Prothesenzähne und ein Lösungsmittel zum Anquellen der Prothesenzähne und/oder der Prothesenbasis, bevorzugt eine MMA-haltige Flüssigkeit.

Dabei kann vorgesehen sein, dass das Set eine fluide zähe Masse, insbesondere ein Wachs oder eine Knete, umfasst, die zum beweglichen Anordnen der Prothesenzähne in der Prothesenbasis vorgesehen ist.

Ferner kann vorgesehen sein, dass das Set einen Zement oder einen Klebstoff zum Fixieren der Prothesenzähne in der Prothesenbasis umfasst.

Schließlich kann auch vorgesehen sein, dass das Set mehrere vorkonfektionierte Prothesenzähne und/oder zumindest einen Prothesenbasisrohling umfasst.

Die Prothesenzähne können auch als Gruppen oder komplette Prothesenzahnreihen vorliegen, die fest miteinander verbunden sind. Im letzteren Fall lässt sich dann nur noch die Lage und Position der Prothesenzahnreihen gegen die Prothesenbasis oder der Prothesenzahnreihen gegeneinander einstellen.

Der Erfindung liegt die überraschende Erkenntnis zugrunde, dass es durch das Verfahren gelingt, die Position und die Lage der Prothesenzähne minimal veränderbar zu machen und anschließend die Dentalprothese auf einfache Weise endfertigen zu können. Hierzu wird maßgeblich der Schlüssel eingesetzt. Mit Hilfe des Schlüssels kann die Ausrichtung und Lage der Prothesenzähne oder der Gruppen von Prothesenzähnen zueinander fixiert werden, so dass beim späteren Einsetzen in die Prothesenbasis die gewünschte und zuvor korrigierte Ausrichtung und Lage der Prothesenzähne zueinander oder der Gruppen von Prothesenzähne zueinander erhalten bleibt. Für die Umsetzung des Verfahrens wichtig ist es, wenn ein Zwischenraum als Spiel zwischen den Flächen zur Fixierung der Prothesenzähne in oder an der Prothesenbasis vorgesehen ist und dieser Zwischenraum mit einer fluiden zähen Masse zur freien und temporär stabilen Positionierung der Prothesenzähne in der Prothesenbasis gefüllt ist.

Durch das Anquellen der Oberflächen der Prothesenzähne und/oder der für die Fixierung der Prothesenzähne vorgesehenen Flächen der Prothesenbasis gelingt es, eine besonders stabile Verbindung der Prothesenzähne mit der Prothesenbasis zu erreichen. Zum Anquellen der Prothesenzähne und/oder der Prothesenbasis wird bevorzugt Methylmethacrylat (MMA) beziehungsweise eine MMA-haltige Lösung verwendet. Die Prothesenzähne bestehen bevorzugt aus hochvernetztem PMMA. Beim Anlösen des PMMA-Materials löst das MMA das PMMA an, dringt ein und führt zur Erweichung des Materials. Dadurch entsteht eine angelöste Schicht, die beim anschließenden endgültigen Verbinden der Prothesenzähne mit der Prothesenbasis mit Hilfe eines bevorzugt verwendeten PMMA-Zements oder Klebers mit zur Stabilisierung der Verbindung führt. Hierdurch wird erfindungsgemäß eine besonders stabile Verbindung der Prothesenzähne mit der Prothesenbasis erreicht.

Im Folgenden werden Ausführungsbeispiele der Erfindung anhand von zwei schematisch dargestellten Figuren erläutert, ohne jedoch dabei die Erfindung zu beschränken. Dabei zeigt:
Figur 1: eine perspektivische Ansicht einer Prothesenbasis für einen Unterkiefer zum Durchführen eines erfindungsgemäßen Verfahrens und
Figur 2: eine perspektivische Ansicht von Prothesenzähnen zum Durchführen eines erfindungsgemäßen Verfahrens zum Einsetzen in die Prothesenbasis nach Figur 1.

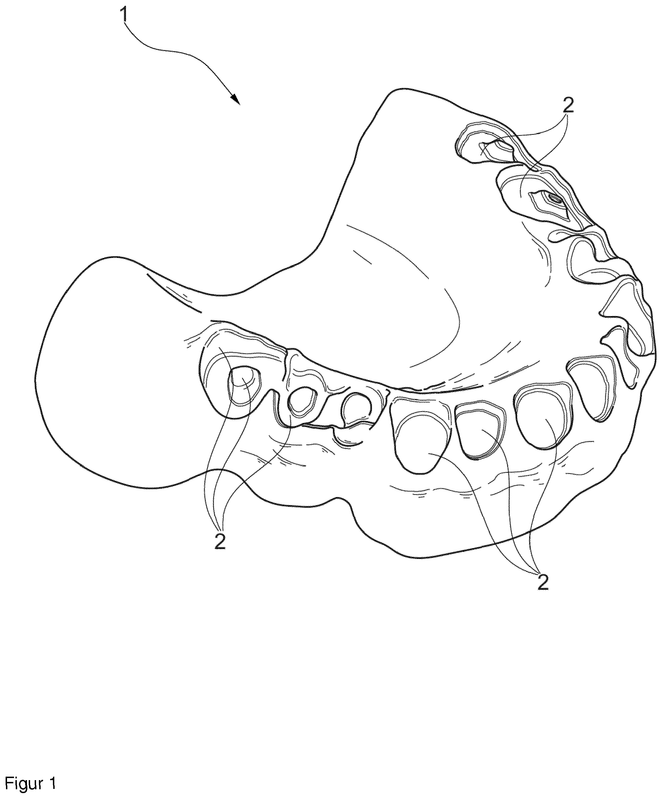

Figur 1 zeigt eine perspektivische Ansicht einer Prothesenbasis 1 für einen Unterkiefer zum Durchführen eines erfindungsgemäßen Verfahrens. Die Prothesenbasis besteht aus einem rosafarben eingefärbten Kunststoff. Die Färbung und Transparenz wird passend zu einer Zahnfleischoptik gewählt. In der Oberseite der Prothesenbasis 1 sind eine Vielzahl von Flächen 2 zur Fixierung von Prothesenzähnen (in Figur 1 nicht gezeigt) vorgesehen.

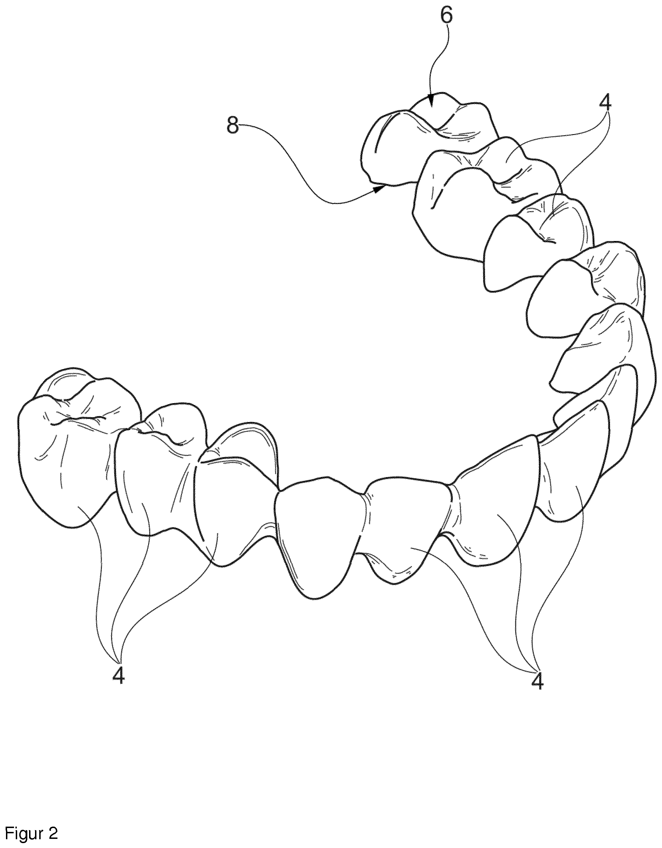

Figur 2 zeigt eine perspektivische Ansicht von Prothesenzähnen 4 zum Durchführen eines erfindungsgemäßen Verfahrens, die zum Einsetzen in die Prothesenbasis 1 nach Figur 1 vorgesehen sind. Es sei darauf hingewiesen, dass die Prothesenzähne 4 bevorzugt vereinzelt vorliegen und nicht miteinander verbunden sind, wie dies in der Figur 2 dargestellt ist. Das Verfahren ist aber auch mit Zahnreihen von miteinander verbundenen Prothesenzähnen 4 durchführbar, die alle oder Gruppenweise miteinander verbunden sind.

Die Prothesenzähne 4 bestehen aus einem harten weißen Kunststoff mit einer für Zähne oder zu den Zähnen des Patienten passenden Färbung und Transparenz. Jeder Prothesenzahn 4 weist eine koronale Oberfläche 6 (Kaufläche) und eine basale Oberfläche 8 auf. Die basale Oberfläche 8 wird in den Flächen 2 zur Fixierung der Prothesenzähne 4 in der Prothesenbasis 1 fixiert. Die Flächen 2 weisen eine Indexierung auf, so dass die Prothesenzähne 4 nur in einer bestimmten Orientierung in der Prothesenbasis einzusetzen sind und jeder Prothesenzahn 4 nur zu einer Fläche 2 passt.

Die Flächen 2 sind etwas größer als die basalen Gegenstücke auf der basalen Seite 8 der Prothesenzähne 4. Vor dem ersten Einsetzen der Prothesenzähne 4 auf die Flächen 2 in die Prothesenbasis 1, wird eine dünne definierte Wachsschicht (nicht gezeigt) auf die basale Seite 8 der Prothesenzähne 4 und/oder die Flächen 2 zur Fixierung der Prothesenzähne 4 in der Prothesenbasis 1 aufgebracht. Die Wachsschicht ist dann nach dem Einsetzen der Prothesenzähne 4 zwischen der Prothesenbasis 1 und den Prothesenzähnen 4 angeordnet. Dadurch sind die eingesetzten Prothesenzähne 4 in der Prothesenbasis 1 leicht beweglich und ermöglichen so dem Zahnarzt oder dem Anwender eine minimale Korrektur der Position und Orientierung der Prothesenzähne 4 in der Prothesenbasis 1. Dadurch können die Position und die Orientierung der Prothesenzähne 4 in der Prothesenbasis 1 an die Bedürfnisse eines Patienten angepasst werden, für den die zu erzeugende Dentalprothese bestimmt ist. Die zur Ausrichtung und Positionierung der Prothesenzähne 4 notwendigen Daten werden am Patienten direkt oder mit Hilfe von CAD-Verfahren und/oder Aufnahmen (3D-Scans) oder mit Hilfe von Artikulatoren und Abdrücken gewonnen. Am einfachsten kann die Prothesenbasis 1 mit den eingesetzten Prothesenzähnen 4 beim Patienten eingesetzt werden und die Position an die Mundraumsituation des Patienten angepasst werden.

Nach erfolgter Anpassung der Lage und Orientierung der Prothesenzähne 4 in der Prothesenbasis 1 werden die Prothesenzähne 4 mit einem Silikonschlüssel (nicht gezeigt) fixiert, indem die Prothesenzähne 4 in eine Silikonmasse eingebettet werden. Dabei dürfen die Prothesenzähne 4 nicht derart mechanisch belastet werden, dass deren Orientierung oder Position verändert wird. Anschließend werden die Prothesenzähne 4 von der Prothesenbasis 1 gelöst.

Die Wachsschicht wird von den Prothesenzähnen 4 und von der Prothesenbasis 1 entfernt. Dies kann beispielsweise durch Abwaschen mit heißem Wasser oder mit Wasserdampf geschehen. Die Prothesenzähne 4 werden an der basalen Seite 8 aufgeraut (beispielsweise mechanisch durch Sandstrahlen oder chemisch mit einem geeigneten Lösungsmittel) und mit einer Flüssigkeit, die Methylmethacrylat (MMA) enthält, angequollen. Ebenso werden die Flächen 2 zur Fixierung der Prothesenzähne 4 in der Prothesenbasis 1 aufgeraut und mit einer MMA-haltigen Flüssigkeit angequollen. Als MMA-haltige Flüssigkeit kann beispielsweise Palabond® der Firma Heraeus Kulzer GmbH verwendet werden.

Nach der so erfolgen Vorkonfektionierung der zu verbindenden Oberflächen erfolgt eine endgültige Zementierung der Prothesenzähne 4 in der Prothesenbasis 1, wobei die Prothesenzähne 4 zunächst noch im Silikonschlüssel fixiert bleiben. Zur Zementierung wird ein Zement im Überschuss verwendet, so dass die Zwischenräume zwischen den Flächen 2 zur Fixierung der Prothesenzähne 4 in der Prothesenbasis 1 und den Prothesenzähnen 4, die zuvor mit dem Wachs gefüllt waren, mit dem Zement gefüllt werden, ohne dass basale Hohlräume in den Zwischenräumen verbleiben und ohne dass im Gingvia-Zahnhalsbereich der erzeugten Dentalprothese Randspalte verbleiben. Zudem werden durch den Überschuss die Kontaktflächen optimal benetzt. Hervorquellende überschüssige Zementteigreste können vor dem Aushärten entfernt werden und/oder nach dem Aushärten entfernt werden.

Zur endgültigen Zementierung der Prothesenzähne 4 in der Prothesenbasis 1 wird ein selbsthärtender Zement auf Pulver-Flüssigkeitsbasis verwendet. Lichthärtende Zemente oder Klebstoffe zeigen üblicherweise keine ausreichende Haftfähigkeit, da das Licht nur in die Randbereiche der Zwischenräume zwischen den Prothesenzähnen 4 und der Prothesenbasis 1 eindringen kann.

Besonders gut geeignet sind aufgrund der schnellen Anquellzeit und der blasenfreien Aushärtung bei Raumtemperatur auch ohne Drucktopf (das heißt ohne Überdruck) bei Raumtemperatur aushärtende Prothesenwerkstoffe auf Pulver-Flüssigkeitsbasis wie zum Beispiel das Produkt Paladur® der Heraeus Kulzer GmbH.

Es sind aber auch andere Härtungs-Kombinationen denkbar, zum Beispiel mit einem dualhärtenden Zement. Hierbei werden die Zähne mittels Licht kurz fixiert und die endgültige Härtung erfolgt über eine Redoxreaktion.

Das erfindungsgemäße Verfahren kann mit manuell oder mittels eines mit Rapid-Prototyping-Verfahren hergestellten Prothesenbasen 1 durchgeführt werden. Ebenso kann das Verfahren auch auf gedruckte Prothesenzähne oder Prothesenzahnreihen angewandt werden.

Die in der voranstehenden Beschreibung, sowie den Ansprüchen, Figuren und Ausführungsbeispielen offenbarten Merkmale der Erfindung können sowohl einzeln, als auch in jeder beliebigen Kombination für die Verwirklichung der Erfindung in ihren verschiedenen Ausführungsformen wesentlich sein.

### Bezugszeichenliste

- 1: Prothesenbasis
- 2: Fläche zur Fixierung von Prothesenzähnen
- 4: Prothesenzahn
- 6: Koronale Fläche des Prothesenzahns
- 8: Basale Fläche des Prothesenzahns

## Patentansprüche

1. Extraorales Verfahren zur Herstellung einer Dentalprothese aus einer Prothesenbasis (1) und mehreren Prothesenzähnen (4), wobei jeder Prothesenzahn (4) eine koronale Oberfläche (6) und eine basale Oberfläche (8) aufweist, aufweisend die folgenden chronologischen Schritte:
A1) an für die Fixierung der Prothesenzähne (4) vorgesehenen Flächen (2) der Prothesenbasis (1) und/oder basal an den Prothesenzähnen (4) wird eine fluide zähe Masse aufgebracht;
A) die basalen Oberflächen (8) der Prothesenzähne (4) werden in die für die Fixierung der Prothesenzähne (4) vorgesehene Flächen (2) der Prothesenbasis (1) eingesetzt und dort mit der Prothesenbasis (1) derart verbunden, dass die Prothesenzähne (4) nach dem Einsetzen in die Prothesenbasis (1) in der Prothesenbasis (1) beschränkt beweglich sind, wobei die fluide zähe Masse nach dem Einsetzen der Prothesenzähne (4) zwischen den Prothesenzähnen (4) und den für die Fixierung der Prothesenzähne (4) vorgesehenen Flächen (2) der Prothesenbasis (1) angeordnet ist, so dass die Position und/oder die Ausrichtung der Prothesenzähne (4) in der Prothesenbasis (1) durch eine Verformung der fluiden zähen Masse verändert werden kann, wobei die für die Fixierung der Prothesenzähne (4) vorgesehenen Flächen (2) der Prothesenbasis (1) größer sind als die korrespondierenden basalen Oberflächen (8) der Prothesenzähne (4), so dass die Prothesenzähne (4) in der Prothesenbasis (1) um bis zu 5° gekippt, gedreht und/oder um bis zu 1 mm in der Position verschoben werden können, und wobei die Flächen (2) eine Indexierung aufweisen, so dass die Prothesenzähne (4) nur in einer bestimmten Orientierung in der Prothesenbasis (1) einzusetzen sind und jeder Prothesenzahn (4) nur zu einer Fläche (2) passt;
B) die Position und/oder die Ausrichtung wenigstens eines Prothesenzahns (4) in der Prothesenbasis (1) wird verändert;
C) die Prothesenzähne (4) werden auf der koronalen Seite (6) in einem Schlüssel fixiert und dabei die Lage und die Position der Prothesenzähne (4) zueinander in der veränderten Position und/oder Ausrichtung gesichert;
D) die Prothesenzähne (4) werden von der Prothesenbasis (1) getrennt;
F) die Prothesenzähne (4) werden mit einem Zement oder einem Klebstoff in der Prothesenbasis (1) befestigt, wobei die Zwischenräume zwischen den für die Fixierung der Prothesenzähne (4) vorgesehenen Flächen (2) der Prothesenbasis (1) und den Prothesenzähnen (4) mit dem Zement oder dem Klebstoff gefüllt werden; und
G) der Zement oder der Klebstoff härtet aus, wobei die Prothesenzähne (4) fest mit der Prothesenbasis (1) verbunden werden, so dass die Lage und die Position der Prothesenzähne (4) zueinander und zur Prothesenbasis (1) festgelegt ist, und der Schlüssel wird von den Prothesenzähnen (4) getrennt.

2. Verfahren nach Anspruch 1, **dadurch gekennzeichnet, dass** als die fluide zähe Masse ein Wachs oder eine Knete verwendet wird.

3. Verfahren nach Anspruch 1 oder 2, **dadurch gekennzeichnet, dass** die fluide zähe Masse, insbesondere das Wachs oder die Knete, nach Schritt D) und vor Schritt F) von den Prothesenzähnen (4) und/oder den für die Fixierung der Prothesenzähne (4) vorgesehenen Flächen (2) der Prothesenbasis (1) entfernt wird.

4. Verfahren nach Anspruch 3, **dadurch gekennzeichnet, dass** die fluide zähe Masse, insbesondere das Wachs oder die Knete, mit heißem Wasser abgespült oder mit Wasserdampf entfernt wird.

5. Verfahren nach einem der vorangehenden Ansprüche, **dadurch gekennzeichnet, dass**
die Prothesenbasis (1) und/oder die Prothesenzähne (4) mit einem CAM-Verfahren oder einem Rapid-Prototyping-Verfahren hergestellt und/oder bearbeitet wird oder werden.

6. Verfahren nach einem der vorangehenden Ansprüche, **dadurch gekennzeichnet, dass**
in einem Schritt E) zwischen den Schritten D) und F) die freiliegenden Oberflächen der Prothesenzähne (4) zumindest bereichsweise mit einem Lösungsmittel angequollen werden.

7. Verfahren nach einem der vorangehenden Ansprüche, **dadurch gekennzeichnet, dass**
in einem Schritt E) zwischen den Schritten D) und F) die für die Fixierung der Prothesenzähne (4) vorgesehenen Flächen (2) der Prothesenbasis (1) zumindest bereichsweise mit einem Lösungsmittel angequollen werden.

8. Verfahren nach Anspruch 6 oder 7, **dadurch gekennzeichnet, dass** in Schritt E) die freiliegenden Oberflächen der Prothesenzähne (4) zumindest bereichsweise aufgeraut und mit einem Lösungsmittel angequollen werden und/oder die für die Fixierung der Prothesenzähne (4) vorgesehenen Flächen (2) der Prothesenbasis (1) zumindest bereichsweise aufgeraut und mit einem Lösungsmittel angequollen werden.

9. Verfahren nach einem der vorangehenden Ansprüche, **dadurch gekennzeichnet, dass**
vor Schritt A1) eine Teildentalprothese oder eine Totaldentalprothese digital mit einem CAD-Verfahren konstruiert wird und mittels File-Splitting in ein virtuelles Modell einer Prothesenbasis (1) und ein virtuelles Modell der Prothesenzähne (4) zerlegt wird, wobei die Prothesenbasis (1) und/oder die Prothesenzähne (4) auf Basis der virtuellen Modelle mittels eines CAM-Verfahrens hergestellt werden.

10. Verfahren nach einem der vorangehenden Ansprüche, **dadurch gekennzeichnet, dass**
in Schritt C) als Schlüssel ein Silikonschlüssel verwendet wird.

11. Verfahren nach einem der vorangehenden Ansprüche, **dadurch gekennzeichnet, dass**
als Zement ein selbsthärtender Zementteig verwendet wird, bevorzugt ein Zementteig aus einem Pulver und einer Flüssigkeit verwendet wird, besonders bevorzugt ein Polymethylmethacrylat-Zementteig verwendet wird.

12. Verfahren nach einem der vorangehenden Ansprüche 6-11, **dadurch gekennzeichnet, dass**
als Lösungsmittel eine Methylmethacrylat-haltige Flüssigkeit verwendet wird.

13. Dentalprothese (1) hergestellt mit einem Verfahren nach einem der Ansprüche 1 bis 12.

## Claims

1. Extraoral process for producing a dental prosthesis from a prosthetic base (1) and multiple prosthetic teeth (4), wherein each prosthetic tooth (4) has a coronal surface (6) and a basal surface (8), **characterized by** the following chronological steps:
A1) a thick, fluid mass is applied to a prosthetic base surfaces (2) provided for fixation of the prosthetic teeth (4) and/or basally to the prosthetic teeth (4), A) Inserting basal surfaces (8) of the prosthetic teeth (4) into the prosthetic base surfaces (2) provided for fixation of the prosthetic teeth (4) of the prosthetic base (1) and connecting them there with the prosthetic base (1) in such a way that after insertion of the prosthetic teeth (4) into the prosthetic base (1) the prosthetic teeth (4) have limited movability in the prosthetic base (1), wherein the thick, fluid mass is arranged, after the insertion of the prosthetic teeth (4), between the prosthetic teeth (4) and the prosthetic base surfaces (2) provided for fixation of the prosthetic teeth (4), so that the position and/or orientation of the prosthetic teeth (4) in the prosthetic base (1) can be changed by deformation of the thick, fluid mass, wherein the surfaces (2) of the prosthetic base (1) which are provided for fixation of the prosthetic teeth (4) being larger than the corresponding basal surfaces (8) of the prosthetic teeth (4), so that the prosthetic teeth (4) can be tilted or rotated by up to 5°, and/or their position can be displaced by up to 1 mm in the prosthetic base (1), and wherein the surfaces (2) have an indexing, so that the prosthetic teeth (4) can only be inserted in one specific orientation in the prosthetic base (1) and every prosthetic tooth (4) only fits to one surface (2);
B) Changing the position and/or the orientation of at least one prosthetic tooth (4) in the prosthetic base (1);
C) Fixing the prosthetic teeth (4) on the coronal side (6) in a key, and securing the orientation and position of the prosthetic teeth (4) to one another in the changed position and/or orientation;
D) Separating the prosthetic teeth (4) from the prosthetic base (1);
F) Fastening the prosthetic teeth (4) in the prosthetic base (1) with a cement or an adhesive, wherein the gaps between the surfaces (2) of the prosthetic base (1) that are provided for fixation of the prosthetic teeth (4) and the prosthetic teeth (4) being filled with the cement or the adhesive; and
G) The cement or adhesive is hardening, whereby the prosthetic teeth (4) being solidly connected with the prosthetic base (1), so that the orientation and position of the prosthetic teeth (4) to one another and to the prosthetic base (1) is fixed, and separating the key from the prosthetic teeth (4).

2. The process according to claim 1, **characterized in that**
a wax or a modeling clay is used as the thick, fluid mass.

3. The process according to claim 1 or 2, **characterized in that** after step D) and before step F) the thick, fluid mass, in particular the wax or the modeling clay, is removed from the prosthetic teeth (4) and/or the surfaces (2) of the prosthetic base (1) that are provided for fixation of the prosthetic teeth (4).

4. The process according to claim 3, **characterized in that**
the thick, fluid mass, in particular the wax or the modeling clay, is washed off with hot water or removed with steam.

5. The process according to any one of the preceding claims, **characterized in that** the prosthetic base (1) and/or the prosthetic teeth (4) is or are produced and/or machined with a CAM process or a rapid prototyping process.

6. The process according to any one of the preceding claims, **characterized in that** in a step E) between steps D) and F), at least areas of the exposed surfaces of the prosthetic teeth (4) are swollen with a solvent.

7. The process according to any one of the preceding claims, **characterized in that** in a step E) between steps D) and F) at least areas of the surfaces (2) of the prosthetic base (1) that are provided for fixation of the prosthetic teeth (4) are swollen with a solvent.

8. The process according to claim 6 or 7, **characterized in that** in step E), at least areas of the exposed surfaces of the prosthetic teeth (4) are roughened and swollen with a solvent and/or at least areas of the surfaces (2) of the prosthetic base (1) that are provided for fixation of the prosthetic teeth (4) are roughened and swollen with a solvent.

9. The process according to any one of the preceding claims, **characterized in that** before step A1) a partial dental prosthesis or a total dental prosthesis is digitally designed using a CAD process and decomposed by means of file-splitting into a virtual model of a prosthetic base (1) and a virtual model of the prosthetic teeth (4), wherein the prosthetic base (1) and/or the prosthetic teeth (4) being produced by means of a CAM process on the basis of the virtual models.

10. The process according to any one of the preceding claims, **characterized in that** the key used in step C) is a silicone key.

11. The process according to any one of the preceding claims, **characterized in that** a self-hardening cement paste is used as cement, preferably a cement paste made from a powder and a liquid, especially preferably a polymethylmethacrylate cement dough.

12. The process according to any one of the claims 6 to 11, **characterized in that** a methyl methacrylate-containing liquid is used as a solvent.

13. A dental prosthesis (1) produced with a process according to any one of the claims 1 through 12.

## Revendications

1. Procédé extra-oral de fabrication d'une prothèse dentaire à partir d'une base de prothèse (1) et de plusieurs dents prothétiques (4), où chaque dent prothétique (4) présente une surface coronale (6) et une surface de base (8), présentant les étapes chronologiques suivantes :
A1) une masse fluide visqueuse est déposée sur des surfaces (2) de la base de prothèse (1) prévues pour la fixation des dents prothétiques (4) et/ou à la base des dents prothétiques (4) ;
A) les surfaces de base (8) des dents prothétiques (4) sont implantées dans les surfaces (2) de la base de prothèse (1) prévues pour la fixation des dents prothétiques (4) et y sont reliées avec la base de prothèse (1) de telle manière que les dents prothétiques (4) sont mobiles de manière limitée dans la base de prothèse (1) après l'implantation dans la base de prothèse (1), où la masse fluide visqueuse est disposée entre les dents prothétiques (4) et les surfaces (2) de la base de prothèse (1) prévues pour la fixation des dents prothétiques (4) après l'implantation des dents prothétiques (4), de sorte que la position et/ou l'orientation des dents prothétiques (4) dans la base de prothèse (1) peuvent être modifiées par une transformation de la masse fluide visqueuse, où les surfaces (2) de la base de prothèse (1) prévues pour la fixation des dents prothétiques (4) sont plus grandes que les surfaces de base (8) des dents prothétiques (4) correspondantes, de sorte que les dents prothétiques (4) dans la base de prothèse (1) peuvent être basculées jusqu'à 5 °, tournées et/ou poussées jusqu'à 1 mm au niveau de la position, et où les surfaces (2) présentent une indexation de sorte que les dents prothétiques (4) ne peuvent être implantées que dans une orientation définie dans la base de prothèse (1) et chaque dent prothétique (4) ne correspond qu'à une surface (2) ;
B) la position et/ou l'orientation d'au moins une dent prothétique (4) dans la base de prothèse (1) est modifiée ;
C) les dents prothétiques (4) sont fixées sur la face coronale (6) dans une clé et ainsi la situation et la position des dents prothétiques (4) les unes par rapport aux autres est assurée dans la position et/ou l'orientation modifiées ;
D) les dents prothétiques (4) sont séparées de la base de prothèse (1) ;
F) les dents prothétiques (4) sont fixées dans la base de prothèse (1) avec un ciment ou une colle, où les espaces intermédiaires entre les surfaces (2) de la base de prothèse (1) prévues pour la fixation des dents prothétiques (4) et les dents prothétiques (4) sont remplis avec le ciment ou la colle ; et
G) le ciment ou la colle durcissent, où les dents prothétiques (4) sont solidement reliées avec la base de prothèse (1) de sorte que la situation et la position des dents prothétiques (4) les unes par rapport aux autres et par rapport à la base de prothèse (1) sont fixées et la clé est séparée par les dents prothétiques (4).

2. Procédé selon la revendication 1, **caractérisé en ce**
**qu'**en tant que masse fluide visqueuse, on emploie une cire ou une pâte à modeler.

3. Procédé selon la revendication 1 ou la revendication 2, **caractérisé en ce que** la masse fluide visqueuse, notamment la cire ou la pâte à modeler, est enlevée des dents prothétiques (4) et/ou des surfaces (2) de la base de prothèse (1) prévues pour la fixation des dents prothétiques (4) après l'étape D) et avant l'étape F).

4. Procédé selon la revendication 3, **caractérisé en ce que** la masse fluide visqueuse, notamment la cire ou la pâte à modeler, est nettoyée avec de l'eau chaude ou est enlevée avec de la vapeur d'eau.

5. Procédé selon l'une des revendications précédentes, **caractérisé en ce que** la base de prothèse (1) et/ou les dents prothétiques (4) est ou sont fabriquées et/ou façonnées avec un procédé de FAO ou un procédé de prototypage rapide.

6. Procédé selon l'une des revendications précédentes, **caractérisé en ce que** les surfaces libres des dents prothétiques (4) sont gélifiées au moins par endroits avec un dissolvant dans une étape E) entre les étapes D) et F).

7. Procédé selon l'une des revendications précédentes, **caractérisé en ce que** les surfaces (2) de la base de prothèse (1) prévues pour la fixation des dents prothétiques (4) sont gélifiées au moins par endroits avec un dissolvant dans une étape E) entre les étapes D) et F).

8. Procédé selon la revendication 6 ou la revendication 7, **caractérisé en ce que** les surfaces libres des dents prothétiques (4) dans l'étape E) sont rendues rugueuses au moins par endroits et sont gélifiées avec un dissolvant, et/ou les surfaces (2) de la base de prothèse (1) prévues pour la fixation des dents prothétiques (4) sont rendues rugueuses au moins par endroits et sont gélifiées avec un dissolvant.

9. Procédé selon l'une des revendications précédentes, **caractérisé en ce qu'**avant l'étape A1), une prothèse dentaire partielle ou une prothèse dentaire totale est construite numériquement au moyen d'un procédé de FAO et est dissociée en un modèle virtuel d'une base de prothèse (1) et en un modèle virtuel des dents prothétiques (4) au moyen d'un découpage de fichiers, où la base de prothèse (1) et/ou les dents prothétiques (4) sont fabriquées sur la base des modèles virtuels au moyen d'un procédé de FAO.

10. Procédé selon l'une des revendications précédentes, **caractérisé en ce qu'**en tant que clé dans l'étape C), on emploie une clé en silicone.

11. Procédé selon l'une des revendications précédentes, **caractérisé en ce qu'**en tant que ciment, on emploie une pâte de ciment auto-durcissante, de préférence on emploie une pâte de ciment constituée d'une poudre et d'un liquide, de manière particulièrement préférée, on emploie une pâte de ciment à base de polyméthylméthacrylate.

12. Procédé selon l'une des revendications précédentes 6 à 11, **caractérisé en ce qu'**en tant que dissolvant, on emploie un liquide contenant du méthacrylate de méthyle.

13. Prothèse dentaire (1) fabriquée avec un procédé selon l'une des revendications 1 à 12.
